# FASCICULE DE BREVET EUROPEEN

(11) **EP 2 252 845 B1**
(45) Date de publication et mention de la délivrance du brevet: **19.12.2018**
(21) Numéro de dépôt: 08855601.4
(22) Date de dépôt: 26.11.2008
(51) Int. Cl.: F25B 39/04, F25B 40/00, F28D 1/04, F28D 9/00

(54) **CONDENSEUR POUR CIRCUIT DE CLIMATISATION AVEC PARTIE DE SOUS-REFROIDISSEMENT**
KONDENSATOR FÜR LUFTKLIMATISIERUNGSKREISLAUF MIT EINEM UNTERKÜHLUNGSTEIL
AIR-CONDITIONING CIRCUIT CONDENSER WITH AN UNDERCOOLING PART

(30) Priorité: 29.11.2007 FR 0708362
(43) Date de publication de la demande: 24.11.2010
(73) Titulaire: Valeo Systèmes Thermiques, 78321 Le Mesnil Saint-Denis Cedex (FR)
(72) Inventeur: MAGNIER-CATHENOD, Anne-Sylvie, F-92210 Saint-cloud (FR); MARTINS, Carlos, F-78150 Le Chesnay (FR); PONCHANT, Matthieu, 69004 LYON (FR)
(74) Mandataire: Metz, Gaëlle
(86) Numéro de dépôt international: PCT/EP2008/066192
(87) Numéro de publication internationale: WO 2009/068547

(56) Documents cités:
- EP-A- 1 767 887
- FR-A1- 2 846 736
- JP-A- 2001 021 234
- JP-A- 2003 106 688
- JP-A- 2004 189 069

## Description

L'invention se rapporte au domaine des circuits de climatisation, notamment pour véhicules automobiles.

Elle concerne plus particulièrement un condenseur comprenant un premier bloc d'échange de chaleur pour assurer le refroidissement d'un fluide frigorigène jusqu'à sa condensation au moyen d'un fluide de refroidissement, ainsi qu'un deuxième bloc d'échange de chaleur pour assurer le sous-refroidissement du fluide frigorigène condensé issu du premier bloc d'échange de chaleur. Ce sous-refroidissement permet de refroidir davantage le fluide frigorigène condensé et chaud provenant du premier bloc d'échange de chaleur.

On connaît déjà, d'après FR 2 846 733, un condenseur de ce type qui intègre en plus une bouteille indémontable brasée entre le premier bloc et le deuxième bloc d'échange de chaleur, lesquels sont formés chacun par des séries de plaques empilées. Le sous-refroidissement du fluide frigorigène dans le deuxième bloc d'échange de chaleur est assuré dans ce cas par le même fluide de refroidissement que dans le premier bloc d'échange de chaleur.

FR2846736 décrit un condenseur selon le préambule de la revendication 1. Le terme « bouteille » désigne ici un réservoir intermédiaire qui permet d'assurer la filtration et la déshydratation du fluide frigorigène et aussi de compenser les variations de volume du fluide frigorigène et d'assurer la séparation des phases liquide et gazeuse.

Le condenseur de la publication FR 2 846 733 est conçu pour fonctionner avec un fluide frigorigène à changement de phase, comme le R 134a.

Toutefois, il peut être intéressant de prévoir dans un circuit de climatisation parcouru par un fluide frigorigène à changement de phase un échangeur de chaleur interne, encore appelé échangeur interne, même si un tel échangeur interne est le plus souvent utilisé dans le cas des circuits parcourus par des fluides frigorigènes, tels que le CO₂, qui ne subissent pas de changement de phase.

On rappellera qu'un échangeur interne permet d'assurer un échange de chaleur entre le fluide frigorigène à haute pression et à haute température, et le même fluide frigorigène à basse pression et à basse température , au sein d'un même circuit.

L'intégration d'un échangeur interne dans un circuit de climatisation nécessite non seulement l'implantation de cet échangeur, mais aussi celle de conduits et connexions supplémentaires, ce qui génère de l'encombrement et crée des sources potentielles supplémentaires de fuites.

Par ailleurs l'intégration d'un tel échangeur interne dans un composant d'un circuit est souvent impossible compte tenu de la structure du composant. C'est le cas notamment du condenseur selon la publication FR 2 846 733 déjà citée.

L'invention a notamment pour but de surmonter les inconvénients précités.

Elle propose à cet effet un condenseur selon la revendication 1, dans lequel le deuxième bloc intègre un échangeur interne pour assurer un échange de chaleur entre le fluide frigorigène condensé et sous-refroidi, appelé « fluide frigorigène haute pression », et le même fluide frigorigène une fois détendu, appelé « fluide frigorigène basse pression ».

La fonction d'échange interne peut être ainsi obtenue dans le deuxième bloc, par exemple, par réalisation d'au moins une passe supplémentaire, entre la sortie du condenseur et le retour de l'évaporateur.

Il en résulte un gain significatif en terme d'encombrement grâce à la suppression du conduit haute pression reliant la sortie du condenseur et l'échangeur interne, lorsqu'il n'est pas intégré, ainsi que celle des blocs de connexion.

Dans un mode général de réalisation de l'invention, le deuxième bloc comprend une partie de sous-refroidissement et une partie d'échange interne, si bien la fonction d'échange interne est alors obtenue dans une partie du deuxième bloc.

Ce mode de réalisation permet de compléter le sous-refroidissement dans le cas où l'échangeur de chaleur interne ne peut suffire à lui seul au besoin de sous-refroidissement.

Le premier et le deuxième bloc d'échange de chaleur sont raccordés entre eux par l'intermédiaire d'une bouteille.

Sous un autre aspect l'invention concerne un circuit de refroidissement parcouru par un fluide de refroidissement et raccordé au premier bloc d'échange de chaleur d'un condenseur tel que défini ci-dessus. Ce circuit de refroidissement est raccordé uniquement au premier bloc dans le deuxième mode de réalisation mentionné plus haut.

Dans la description qui suit, faite seulement à titre d'exemple, on se réfère aux dessins annexés, sur lesquels :
- la figure 1 est un schéma illustrant un circuit de climatisation comportant un condenseur dans une première forme de réalisation de l'invention, dans laquelle le deuxième bloc comprend une partie de sous-refroidissement et un échangeur de chaleur interne;
- la figure 2 est une vue en perspective d'un condenseur à bouteille intégrée selon l'invention, propre à faire partie du circuit de climatisation de la figure 1 ;
- la figure 3 est une vue de dessus du condenseur de la figure 2 ;
- la figure 4 est une vue d'extrémité du condenseur des figures 2 et 3 ;
- la figure 5 est une vue en coupe suivant la ligne V-V de la figure 4 ;
- la figure 6 est une vue en coupe suivant la ligne VI-VI de la figure 4 ;
- les figures 7 et 8 sont des vues en perspective de deux plaques d'échange de chaleur propres à faire partie du condenseur des figures 2 à 6 ;
- la figure 9 est un schéma illustrant un circuit de climatisation comportant un condenseur dans une deuxième forme de réalisation qui ne fait pas partie de l'invention.

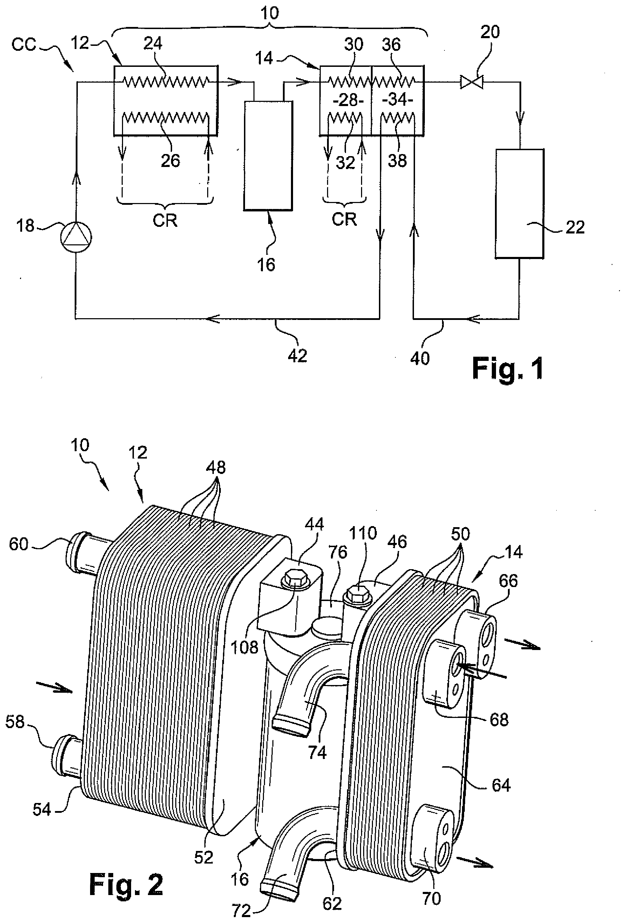

On se réfère d'abord à la figure 1 qui montre un circuit de climatisation CC d'un véhicule automobile comprenant un condenseur 10 selon l'invention.

Dans l'exemple, le condenseur 10 est destiné avant tout à fonctionner avec un fluide frigorigène susceptible d'être présent sous une forme liquide et sous une forme gazeuse. Il peut s'agir notamment d'un fluide fluoré tel que celui connu sous l'appellation R 134a.

Le condenseur comprend un premier bloc 12 d'échange de chaleur pour assurer le refroidissement du fluide frigorigène jusqu'à sa condensation au moyen d'un fluide de refroidissement, un deuxième bloc 14 d'échange de chaleur pour assurer le sous-refroidissement du fluide frigorigène au moyen d'un fluide de refroidissement, ainsi qu'une bouteille 16 interposée entre les blocs 12 et 14 et qui est propre à être traversée par le fluide frigorigène. Les blocs 12 et 14 constituent respectivement un bloc principal et un bloc additionnel.

Dans le circuit de climatisation CC, le fluide frigorigène traverse en boucle fermée un compresseur 18, le condenseur 10 (corps 12, bouteille 16 et corps 14), un détendeur 20 et un évaporateur 22 avant de regagner le compresseur, et ainsi de suite.

Le fluide frigorigène en phase gazeuse provenant du compresseur 18 est d'abord refroidi jusqu'à sa condensation dans le premier bloc 12. Il traverse ensuite la bouteille 16, où il est filtré et déshydraté, puis le deuxième bloc 14 qui assure le sous-refroidissement du fluide frigorigène préalablement condensé. A la sortie du deuxième bloc 14, le fluide frigorigène est détendu par le détendeur 20, puis transformé en phase gazeuse dans l'évaporateur 22 pour être ensuite comprimé par le compresseur 18. L'évaporateur est par ailleurs balayé par un flux d'air qui est refroidi par échange thermique avec le fluide frigorigène qui se vaporise pour produire un flux d'air climatisé à envoyer dans un habitacle de véhicule automobile.

Le premier bloc 12 comprend un passage de circulation 24 pour le fluide frigorigène provenant du compresseur 18 et un passage de circulation 26 pour un fluide de refroidissement. Ce dernier est généralement un liquide, comme de l'eau additionnée d'un antigel, qui circule dans un circuit CR (non représenté). Ce circuit est appelé généralement circuit à Basse Température (BT) et est distinct du circuit à Haute Température (HT) servant au refroidissement du moteur du véhicule. Le fluide frigorigène est ainsi condensé par échange thermique avec le fluide de refroidissement avant d'être envoyé dans la bouteille 16.

Le deuxième bloc 14 intègre ici un échangeur de chaleur interne (appelé aussi « échangeur interne ») pour assurer un échange de chaleur entre le fluide frigorigène condensé et sous-refroidi, appelé « fluide frigorigène haute pression », et le même fluide frigorigène une fois détendu, appelé « fluide frigorigène basse pression ».

Bien qu'un tel échangeur interne soit habituellement utilisé dans le cas de circuits parcourus par un fluide frigorigène, tel que le CO₂, il peut aussi trouver un intérêt dans le cas de circuits parcourus par un fluide frigorigène à changement de phase.

Le deuxième bloc 14 comprend une partie de sous-refroidissement 28 ayant un passage de circulation 30 pour le fluide frigorigène provenant du premier bloc 12, et plus particulièrement de la bouteille 16 dans cet exemple, et un passage de circulation 32 pour un fluide de refroidissement. Il s'agit de préférence du même fluide de refroidissement que pour le corps 12, donc circulant dans le même circuit CR.

Le bloc 14 comprend en outre une partie d'échange interne 34 ayant un passage de circulation 36 pour le fluide frigorigène haute pression provenant de la partie de sous-refroidissement 28 et un passage de circulation 38 pour le fluide frigorigène basse pression. Le passage de circulation 36 est relié, d'une part, au passage de circulation 30 avec lequel il communique directement et, d'autre part, au détendeur 20. Le passage de circulation 38 est disposé entre l'évaporateur 22 et le compresseur 18 auxquels il est relié par des lignes respectives 40 et 42. Ainsi, dans le bloc 14, le fluide frigorigène à haute pression (HP) est d'abord sous-refroidi puis il échange de la chaleur avec le même fluide frigorigène à basse pression (BP) qui est à plus basse température, ce qui produit un refroidissement complémentaire du fluide frigorigène à haute pression.

On se réfère maintenant aux figures 2 à 6 pour décrire un mode de réalisation d'un condenseur propre à faire partie du circuit de la figure 1.

La bouteille 16 est fixée de manière démontable entre les blocs 12 et 14 par l'intermédiaire respectivement d'une bride de sortie 44 et d'une bride d'entrée 46. Ces deux brides assurent la fixation mécanique de la bouteille 16 entre les blocs 12 et 14, et elles forment en même temps des interfaces pour la circulation du fluide frigorigène, c'est-à-dire pour passer du bloc 12 au bloc 14 via la bouteille 16.

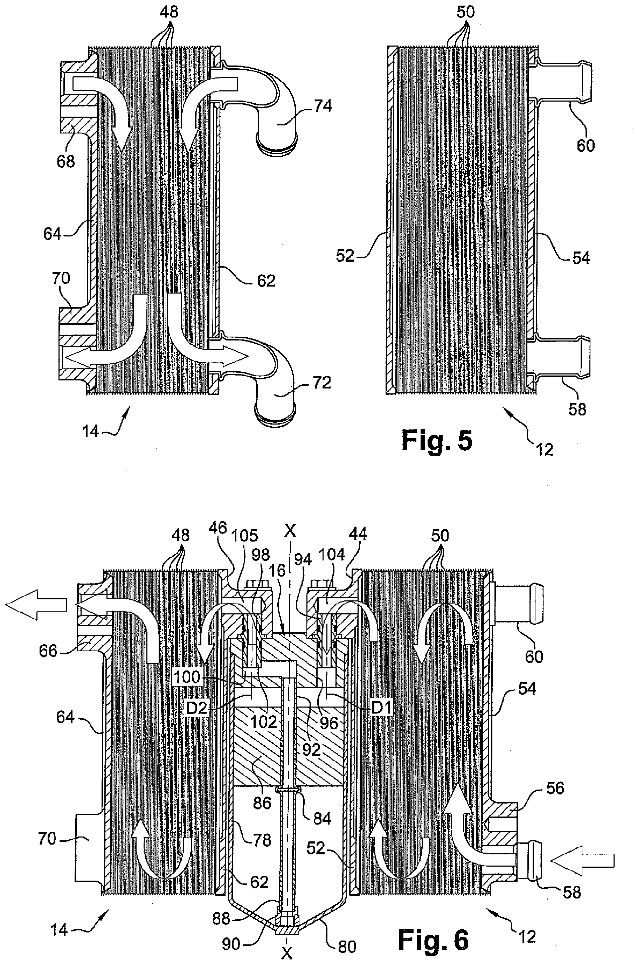

Le premier bloc 12 et le deuxième bloc 14 comprennent chacun une série de plaques empilées 48, respectivement 50 (figures 5 et 6). Les plaques 48 du bloc 12 délimitent des lames de circulation du fluide frigorigène (formant le passage de circulation 24) qui alternent avec des lames de circulation du fluide de refroidissement (formant le passage de circulation 26).

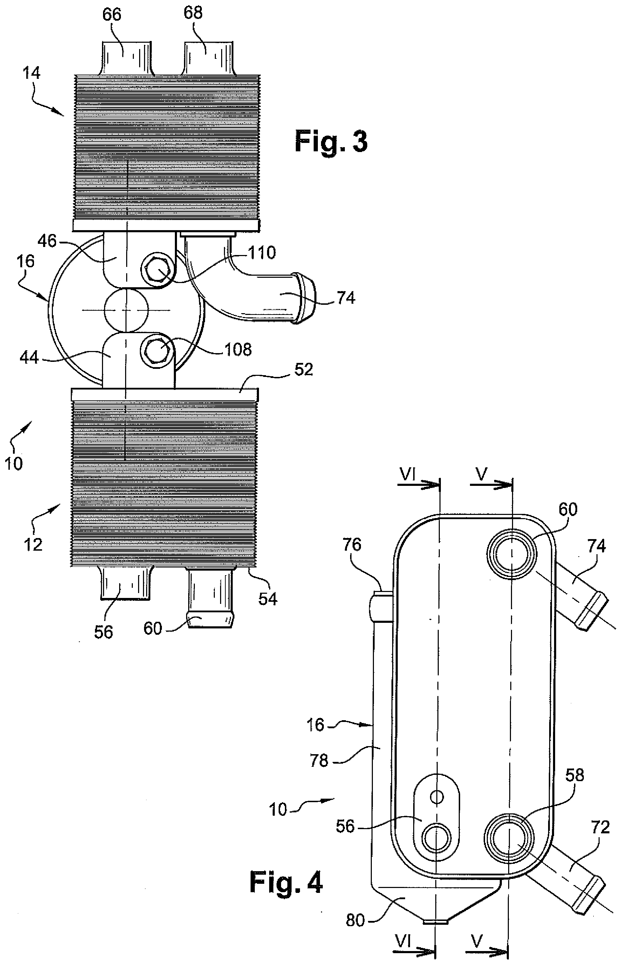

Le bloc 12 comprend une plaque d'interface 52 munie de la bride de sortie 44 et une plaque d'interface opposée 54 munie d'une bride d'entrée 56 pour le fluide frigorigène à condenser (figures 3, 4 et 6). Les plaques empilées 48 sont disposées entre les plaques d'interface 52 et 54. La bride d'entrée 56 est propre à être reliée à la sortie du compresseur 18 pour amener le fluide frigorigène à condenser. La plaque d'interface 54 est munie en outre d'une tubulure d'entrée 58 et d'une tubulure de sortie 60 pour le fluide de refroidissement (figures 2, 4, 5 et 6).

Les plaques empilées 50 du bloc 14 délimitent des premières lames de circulation du fluide frigorigène qui alternent avec des deuxièmes lames de circulation d'un autre fluide. Ces premières lames forment successivement le passage de circulation 30 de la partie de sous-refroidissement 28 et le passage de circulation 36 de la partie d'échange interne 34 (figure 1).

Les deuxièmes lames constituent des lames destinées à la circulation du fluide de refroidissement dans la partie de sous-refroidissement 28 (passage de circulation 32) et des lames destinées à la circulation du fluide frigorigène basse pression dans la partie d'échange interne 34 (passage de circulation 38).

Les plaques 50 du corps 14 sont comprises entre une plaque d'interface 62 munie de la bride d'entrée 46 pour le fluide frigorigène provenant du premier bloc 12, et plus particulièrement de la bouteille 16, et une plaque d'interface opposée 64. Cette dernière est munie d'une bride de sortie 66 pour le fluide frigorigène haute pression, d'une bride d'entrée 68 pour le fluide frigorigène basse pression et d'une bride de sortie 70 pour le fluide frigorigène basse pression (figure 2). La bride de sortie 66 alimente la ligne 40 sur laquelle sont montés le détendeur 20 et l'évaporateur et qui rejoint la bride d'entrée 68. La bride de sortie 70 alimente la ligne 42 qui comprend le compresseur 18 et qui rejoint le bloc 12.

La plaque d'interface 62 du bloc 14 est munie en outre d'une tubulure d'entrée 72 et d'une tubulure de sortie 74 pour le fluide de refroidissement du circuit CR. Dans l'exemple la plaque d'interface 52 est réalisée d'une seule pièce avec la bride 44, par exemple par moulage et usinage d'un alliage à base d'aluminium. Il en est de même pour la plaque d'interface 54 avec la bride 56, pour la plaque d'interface 62 avec la bride 46, et pour la plaque d'interface 64 avec les brides 66, 68 et 70. En revanche, les tubulures 58 et 60 sont rapportées sur la plaque d'interface 54, et les tubulures 72 et 74 sont rapportées sur la plaque d'interface 62.

Les brides 44 et 46 sont propres à être fixées de manière démontable sur une partie réceptrice 76 de la bouteille 16. Dans l'exemple de réalisation, la partie réceptrice 76 est un couvercle d'extrémité de forme générale circulaire qui vient coiffer un corps 78 de forme générale cylindrique circulaire de la bouteille, qui se termine par un fond conique 80. Dans l'exemple, ce couvercle d'extrémité est brasé sur le corps 78, la bouteille 16 étant ainsi rendue indémontable en elle-même.

Le couvercle d'extrémité 76 est fixé sur une extrémité ouverte du corps 78, à l'opposé du fond conique 80, en maintenant un tube axial 82 qui s'étend suivant la direction axiale XX de la bouteille (figure 6). Ce tube 82 comporte une collerette de retenue 84 qui permet de maintenir en position une cartouche filtrante et dessicante 86 disposée entre le couvercle d'extrémité 76 et ladite collerette.

Le tube 82 comporte une extrémité inférieure 88 qui s'engage dans une bague 90 maintenue dans la région centrale du fond 80 et qui peut laisser passer le fluide frigorigène. Le tube comporte en outre une extrémité supérieure 92 qui est maintenue dans un logement axial du couvercle d'extrémité.

La bride 44 comprend un alésage de sortie 94 propre à venir dans le prolongement d'un alésage d'entrée 96 de la partie réceptrice (couvercle 76) de la bouteille suivant une première direction d'alignement D1 (figure 6). De façon correspondante, la bride 46 comprend un alésage d'entrée 98 propre à venir dans le prolongement d'un alésage de sortie 100 de la partie réceptrice (couvercle 76) de la bouteille suivant une deuxième direction d'alignement D2 (figure 6).

L'alésage d'entrée 96 traverse l'épaisseur de la partie réceptrice 76 et débouche à l'intérieur de la bouteille en amont de la cartouche 86. L'alésage de sortie 100 de la partie réceptrice 76 débouche dans un alésage radial 102 qui communique avec l'extrémité supérieure 92 du tube 82.

L'alésage d'entrée 96 et l'alésage de sortie 100 de la partie réceptrice sont parallèles entre eux et à l'axe longitudinal XX de la bouteille 16. Les alésages 96 et 102 sont disposés dans une position angulaire choisie par rapport à l'axe longitudinal XX de la bouteille 16. Ceci permet de donner une orientation angulaire déterminée aux corps 12 et 14 par rapport à la bouteille 16 en fonction des conditions d'implantation du condenseur, par exemple dans le compartiment moteur d'un véhicule déterminé. Dans l'exemple de réalisation représenté, cette position angulaire est de sensiblement 180°, les alésages 96 et 100 étant disposés symétriquement de part et d'autre de l'axe longitudinal.

Comme on peut le voir sur la figure 6, l'alésage de sortie 94 de la bride 44 se raccorde sensiblement à angle droit avec un alésage intermédiaire 104 débouchant dans le premier bloc 12. De plus, l'alésage d'entrée 98 de la bride 46 se raccorde sensiblement à angle droit avec un alésage intermédiaire 106 débouchant dans le deuxième bloc 14.

Il en résulte que le fluide frigorigène issu du premier bloc 12 pénètre dans la bouteille en passant successivement par l'alésage intermédiaire 104 et l'alésage de sortie 94 de la bride 44 puis par l'alésage d'entrée 96 de la partie réceptrice 76, pour être ensuite filtré et desséché en traversant la cartouche 86. Le fluide frigorigène remonte par le tube 82 pour traverser successivement l'alésage radial 102 et l'alésage de sortie 100 de la partie réceptrice puis l'alésage d'entrée 98 et l'alésage intermédiaire 106 de la deuxième bride 46 pour déboucher dans le deuxième bloc 14.

Pour assurer l'étanchéité, on prévoit à chaque fois un raccord étanche entre la bride 44 et le couvercle 76 et entre le couvercle 50 et la bride 46. Ce raccord étanche est formé avantageusement d'une tubulure munie de deux joints toriques.

Les brides 44 et 46 sont propres à être fixées chacune sur la partie réceptrice 76 de la bouteille au moyen d'une vis 108, respectivement 110, qui à chaque fois traverse la bride et s'engage par vissage dans la partie réceptrice (voir figures 2 et 3). La bouteille 16 forme ainsi support pour les blocs 12 et 14 d'échange de chaleur qui peuvent être fixés avec une orientation mutuelle déterminée en fonction de la position angulaire respective des alésages 96 et 100/102.

Il est donc possible de concevoir des parties réceptrices 76 différentes en fonction de l'application souhaitée pour permettre d'implanter les blocs 12 et 14 avec des orientations particulières par rapport à la partie réceptrice 76 suivant le type de véhicule auquel le condenseur est destiné.

Comme la bouteille forme en même temps un support, elle peut elle-même être munie de moyens d'interface ou de fixation (non représentés) pour la fixation sur la structure du véhicule auquel est destiné le condenseur.

On comprendra que la bouteille peut être assemblée et prééquipée avant d'être installée et fixée entre les deux blocs d'échange de chaleur, ce qui simplifie grandement les opérations de montage et d'assemblage, mais aussi les opérations de maintenance.

Par ailleurs, du fait que les blocs 12 et 14 et la bouteille 16 sont démontables les uns par rapport aux autres, il est possible de remplacer l'un de ces trois éléments en cas de défaillance.

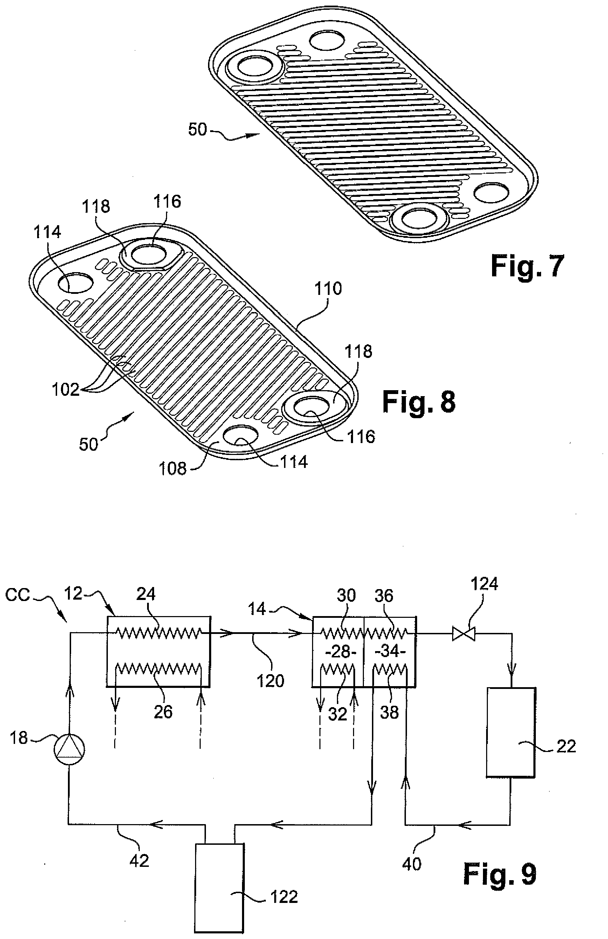

On se réfère maintenant aux figures 7 et 8 qui montrent deux plaques d'échange de chaleur 50 identiques mais décalées de 180° l'une par rapport à l'autre. Ces deux plaques sont représentées en position écartée pour les raisons de clarté, alors qu'en réalité elles viennent s'emboîter entre elles d'une manière en soi connue.

Chaque plaque 50 comprend un fond plat 108 dans l'exemple de forme générale rectangulaire et muni de coins arrondis. Le fond 108 est entouré par un bord relevé 110 réalisé en dépouille. Le fond 108 comprend des nervures parallèles 102 disposées en oblique et servant de perturbateurs. Dans la région des quatre coins du fond sont prévues des ouvertures de passage de fluide. Deux ouvertures 114 sont prévues dans le fond plat 108 aux deux extrémités d'un grand côté et deux autres ouvertures de passage 116 sont prévues aux deux extrémités d'un autre grand côté. Les ouvertures 114 sont réalisées au niveau du fond plat, tandis que les ouvertures 116 sont formées dans des régions annulaires 118 décalées par rapport au plan du fond 108. Ainsi, lorsque les plaques 50 sont empilées mutuellement et brasées entre elles par leurs bords 110 respectifs, on forme des lames alternées pour la circulation de deux fluides différents.

On utilise des plaques analogues pour le bloc 12 et le bloc 14. Dans le cas du bloc 14, il faut prévoir une cloison pour séparer le fluide de refroidissement qui circule dans la partie de sous-refroidissement et le fluide frigorigène à base pression qui circule dans la partie d'échange interne. Ceci peut être réalisé par une cloison rapportée ou bien par un aménagement des ouvertures de communication précitées.

On se réfère maintenant à la figure 9 qui montre une variante de réalisation du circuit CC de la figure 1 , qui ne fait pas partie de l'invention. Les éléments communs avec ceux de la figure 1 sont désignés par les mêmes références numériques. Dans cette forme de réalisation, la bouteille 16 est supprimée et les deux blocs 12 et 14 communiquent directement entre eux par une liaison 120. Concrètement, les brides 44 et 46 (figure 2) sont alors raccordées directement entre elles, soit par un élément intermédiaire assurant leur jonction, soit par un aménagement approprié de ces deux brides.

Dans le circuit de la figure 9, la bouteille est remplacée par un accumulateur 122 qui est disposé dans la ligne 42, entre la sortie de la partie d'échange interne 34 et le compresseur 18. Par ailleurs, le détendeur 20 est ici remplacé par un orifice calibré 124.

Dans un autre mode, on se réfère à un circuit de climatisation CC analogue à celui de la figure 1 et comprenant un condenseur selon l'invention.

Le condenseur comprend un premier bloc d'échange de chaleur et un deuxième bloc d'échange de chaleur analogues respectivement aux blocs 12 et 14 décrits précédemment, ainsi qu'une bouteille interposée entre les deux blocs. La bouteille est analogue à la bouteille 16 décrite précédemment et peut être éventuellement supprimée.

Le circuit de climatisation CC comprend en outre un compresseur, un détendeur et un évaporateur analogues respectivement au compresseur 18, au détendeur 20 et à l'évaporateur 22 de la figure 1.

Le premier bloc comprend un passage de circulation pour le fluide frigorigène provenant du compresseur et un passage de circulation pour un fluide de refroidissement.

Le deuxième bloc constitue ici un échangeur de chaleur interne (appelé aussi « échangeur interne ») pour assurer un échange de chaleur entre le fluide frigorigène condensé et sous-refroidi, appelé « fluide frigorigène haute pression », issu du premier bloc d'échange de chaleur et le même fluide frigorigène une fois détendu, appelé « fluide frigorigène basse pression ».

Le deuxième bloc se différentie du deuxième bloc 14 de la forme de réalisation précédente par le fait qu'il comprend uniquement un échangeur de chaleur interne et qu'il est donc dépourvu de partie de sous-refroidissement. Il en résulte une simplification de la structure dudit deuxième bloc et de ses connexions.

Le deuxième bloc, formant un échangeur interne, comprend un passage de circulation pour le fluide frigorigène haute pression provenant du premier bloc via la bouteille et un passage de circulation pour le fluide frigorigène basse pression provenant de l'évaporateur. Le passage de circulation est relié en amont à la bouteille et en aval au détendeur. Le passage de circulation est disposé entre l'évaporateur et le compresseur auxquels il est relié par des lignes respectives.

Ainsi, dans le deuxième bloc, le fluide frigorigène à haute pression (HP) échange de la chaleur avec le même fluide frigorigène à basse pression (BP) qui est à plus basse température, ce qui produit un refroidissement supplémentaire du fluide frigorigène condensé à haute pression provenant du premier bloc.

Un condenseur 210 propre à faire partie du circuit ci-dessus va maintenant être évoqué. Le condenseur forme ici un module qui comprend lesdits premier et deuxième et ladite bouteille.

La bouteille est fixée de manière démontable entre les blocs par l'intermédiaire respectivement d'une bride de sortie du premier bloc et d'une bride d'entrée du second bloc. Ces deux brides assurent la fixation mécanique de la bouteille entre les blocs, et elles forment en même temps des interfaces pour la circulation du fluide frigorigène, c'est-à-dire pour passer du premier bloc au second bloc via la bouteille.

Le premier bloc et le deuxième bloc comprennent chacun une série de plaques empilées. Dans l'exemple, le nombre des plaques du premier bloc est supérieur à celui des plaques du second bloc, si bien que le premier bloc est plus encombrant que le deuxième bloc dans la direction de l'empilement.

Les plaques du premier bloc délimitent des lames de circulation du fluide frigorigène qui alternent avec des lames de circulation du fluide de refroidissement.

Le premier bloc comprend une plaque d'interface munie de la bride de sortie dudit premier bloc et une plaque d'interface opposée munie d'une bride d'entrée pour le fluide frigorigène à condenser. Les plaques empilées sont disposées entre les plaques d'interface. La bride d'entrée pour le fluide frigorigène à condenser est propre à être reliée à la sortie du compresseur pour amener le fluide frigorigène à condenser. La plaque d'interface opposée est munie en outre d'une tubulure d'entrée et d'une tubulure de sortie pour le fluide de refroidissement.

Les plaques empilées du deuxième bloc délimitent des premières lames de circulation pour le fluide frigorigène à haute qui alternent avec des deuxièmes lames de circulation pour le fluide frigorigène à basse pression. Les premières lames et les deuxièmes lames précitées constituent ainsi respectivement les passages de circulation.

Les plaques du second bloc sont comprises entre une plaque d'interface munie de la bride d'entrée pour le fluide frigorigène provenant du premier bloc via la bouteille, et une plaque d'interface opposée. Cette dernière est munie d'une bride de sortie pour le fluide frigorigène haute pression, d'une bride d'entrée pour le fluide frigorigène basse pression et d'une bride de sortie pour le fluide frigorigène basse pression. La bride de sortie de la plaque d'interface opposée dudit second bloc alimente la ligne sur laquelle sont montés le détendeur et l'évaporateur et qui rejoint la bride d'entrée pour le fluide frigorigène basse pression. Une bride de sortie alimente la ligne sur laquelle est monté le compresseur, et qui rejoint le premier bloc.

La plaque d'interface du premier bloc est réalisée d'une seule pièce avec la bride associée, par exemple par moulage et usinage d'un alliage à base d'aluminium. Il en est de même pour la plaque d'interface opposée et la bride associé, pour la plaque d'interface du second bloc avec la bride associée, et pour la plaque d'interface opposée avec les brides associés. En revanche, les tubulures sont rapportées sur la plaque d'interface opposée du premier bloc.

Les brides de sortie du premier bloc et d'entrée du second bloc sont fixées de manière démontable sur une partie réceptrice de la bouteille. Dans l'exemple de réalisation, la partie réceptrice est un couvercle d'extrémité de forme générale circulaire qui vient coiffer un corps de la bouteille. Le corps présente une forme générale cylindrique circulaire et se termine par un fond conique. Dans l'exemple, la partie réceptrice est brasée sur le corps, la bouteille étant ainsi rendue indémontable.

La partie réceptrice est fixée sur une extrémité ouverte du corps, à l'opposé du fond conique, en maintenant un tube axial qui s'étend suivant la direction axiale de la bouteille. Ce tube comporte une collerette de retenue servant à maintenir en position une cartouche filtrante et dessicante disposée entre la partie réceptrice et ladite collerette.

Le tube comporte une extrémité inférieure qui s'engage dans une bague maintenue dans la région centrale du fond et qui peut laisser passer le fluide frigorigène. Le tube comporte en outre une extrémité supérieure qui est maintenue dans un logement axial de la partie réceptrice.

La bride de sortie du premier bloc comprend un alésage de sortie propre à venir dans le prolongement d'un alésage d'entrée de la partie réceptrice de la bouteille suivant une première direction d'alignement. De façon correspondante, la bride d'entrée du second bloc comprend un alésage d'entrée propre à venir dans le prolongement d'un alésage de sortie de la partie réceptrice de la bouteille suivant une deuxième direction d'alignement.

L'alésage d'entrée de la bouteille traverse l'épaisseur de la partie réceptrice et débouche à l'intérieur de la bouteille en amont de la cartouche. L'alésage de sortie de la partie réceptrice débouche dans un alésage radial qui communique avec l'extrémité supérieure du tube de la bouteille.

L'alésage d'entrée et l'alésage de sortie de la partie réceptrice sont parallèles entre eux et à l'axe longitudinal de la bouteille. Lesdits alésages sont disposés dans une position angulaire choisie par rapport à l'axe longitudinal de la bouteille. Ceci permet de donner une orientation angulaire déterminée aux blocs par rapport à la bouteille en fonction des conditions d'implantation du condenseur, par exemple dans le compartiment moteur d'un véhicule déterminé. Dans un exemple de réalisation, cette position angulaire est de sensiblement 180°, les alésages étant disposés symétriquement de part et d'autre de l'axe longitudinal.

L'alésage de sortie de la bride de sortie du premier bloc se raccorde sensiblement à angle droit avec un alésage intermédiaire débouchant dans le premier bloc. De plus, l'alésage d'entrée de la bride d'entrée du second bloc se raccorde sensiblement à angle droit avec un alésage intermédiaire débouchant dans le deuxième bloc.

Il en résulte que le fluide frigorigène issu du premier bloc pénètre dans la bouteille en passant successivement par l'alésage intermédiaire et l'alésage de sortie de la bride puis par l'alésage d'entrée de la partie réceptrice, pour être ensuite filtré et desséché en traversant la cartouche. Le fluide frigorigène remonte par le tube pour traverser successivement l'alésage radial et l'alésage de sortie de la partie réceptrice puis l'alésage d'entrée et l'alésage intermédiaire de la bride pour déboucher dans le deuxième bloc.

Les brides de sortie et d'entrée du premier et du second bloc sont fixées chacune sur la partie réceptrice de la bouteille au moyen d'une vis qui à chaque fois traverse la bride et s'engage par vissage dans la partie réceptrice.

La bouteille présente ainsi la même structure et les mêmes fonctions que la bouteille décrite précédemment. Ces dernières ne seront donc pas décrites à nouveau en détail.

Les plaques 240 et 242 sont analogues aux plaques 48 et 50 décrites précédemment et ne seront donc pas décrites en détail.

Dans ce circuit, la bouteille est remplacée par un accumulateur qui est disposé dans la ligne, entre la sortie du corps et le compresseur. Par ailleurs, le détendeur est réalisé ici sous la forme d'un orifice calibré.

Dans un autre mode, un circuit de refroidissement CR est associé au condenseur à échangeur interne intégré précédent, formé des premier et second blocs d'échange de chaleur et de la bouteille.

Le circuit de refroidissement CR comprend un radiateur de refroidissement. Il s'agit d'un radiateur qualifié de radiateur à basse température ou « radiateur BT ». Le fluide de refroidissement est avantageusement de l'eau additionnée d'un antigel. Le fluide de refroidissement quitte le premier bloc par une ligne reliant une tubulure de sortie du premier bloc à l'entrée du radiateur. Le fluide de refroidissement est ensuite refroidi dans le radiateur par échange thermique avec de l'air extérieur qui balaye le faisceau du radiateur. Puis le fluide refroidi regagne le premier bloc par une ligne reliant la sortie du radiateur à la tubulure d'entrée du bloc.

Il en résulte une simplification du circuit de refroidissement CR puisque ce dernier ne comporte qu'un seul niveau d'échange de chaleur avec le condenseur, c'est-à-dire seulement avec le premier bloc. Le circuit CR ne comporte donc qu'une seule boucle de circulation.

En revanche, dans le cas du condenseur selon la publication FR 2 846 733, il fallait deux niveaux d'échange de chaleur, l'un à « Basse Température » (boucle BT) avec le premier bloc et l'autre à « Super Basse Température » (boucle SBT) avec le deuxième bloc.

Il en résulte une diminution du nombre de tubulures et de conduites dans le véhicule. Le radiateur de refroidissement est plus simple du fait qu'il ne comporte qu'une seule entrée et une seule sortie. L'utilisation du fluide réfrigérant à basse pression sortant de l'évaporateur pour assurer le sous-refroidissement du même fluide réfrigérant à haute température dans le second bloc permet de supprimer la passe « Super Basse Température » du radiateur de refroidissement.

L'invention n'est pas limitée aux modes de réalisation décrits précédemment à titre d'exemples et s'étend à d'autres variantes.

Elle trouve une application particulière aux circuits de climatisation pour véhicules automobiles.

## Revendications

1. Condenseur, notamment pour un circuit de climatisation de véhicule automobile, comprenant un premier bloc (12) d'échange de chaleur pour assurer le refroidissement d'un fluide frigorigène jusqu'à sa condensation au moyen d'un fluide de refroidissement, ainsi qu'un deuxième bloc (14) d'échange de chaleur pour assurer le sous-refroidissement du fluide frigorigène au moyen d'un fluide de refroidissement, ledit deuxième bloc (14) intégrant un échangeur interne (34) pour assurer un échange de chaleur entre le fluide frigorigène condensé et sous- refroidi, appelé « fluide frigorigène haute pression », et le même fluide frigorigène une fois détendu, appelé « fluide frigorigène basse pression », condenseur **caractérisé en ce que** le deuxième bloc (14) comprend une plaque d'interface (64) munie d'une bride de sortie (66) pour le fluide frigorigène haute pression, d'une bride d'entrée (68) pour le fluide frigorigène basse pression et d'une bride de sortie (70) pour le fluide frigorigène basse pression, dans lequel le deuxième bloc comprend un passage de circulation pour le fluide frigorigène haute pression provenant du premier bloc et un passage de circulation pour le fluide frigorigène basse pression, dans lequel le deuxième bloc (14) comprend une plaque d'interface (62) munie d'une bride d'entrée (46) pour le fluide frigorigène provenant du premier bloc (12), opposée a ladite plaque d'interface (64) munie de la bride de sortie (66) pour le fluide frigorigène haute pression, de la bride d'entrée (68) pour le fluide frigorigène basse pression et de la bride de sortie (70) pour le fluide frigorigène basse pression, ledit condenseur comprend en outre une bouteille (16) interposée entre le premier bloc (12) et le deuxième bloc (14) et propre à être traversée par le fluide frigorigène, ladite bouteille (16) est fixée de manière démontable entre le premier bloc (12) et le deuxième bloc (14) par l'intermédiaire respectivement d'une bride de sortie (44) et d'une bride d'entrée (46) qui sont fixées sur une partie réceptrice (76) de la bouteille (16) et qui forment en même temps des interfaces pour la circulation du fluide frigorigène.

2. Condenseur selon la revendication 1, **caractérisé en ce que** le deuxième bloc (14) comprend une partie de sous-refroidissement (28) ayant un passage de circulation (30) pour le fluide frigorigène provenant du premier bloc (12) et un passage de circulation (32) pour le fluide de refroidissement et une partie d'échange interne (34) ayant un passage de circulation (36) pour le fluide frigorigène haute pression provenant de la partie de sous- refroidissement (28) et un passage de circulation (38) pour le fluide frigorigène basse pression.

3. Condenseur selon la revendication 2, **caractérisé en ce que** le passage de circulation (30) pour le fluide frigorigène de la partie de sous-refroidissement (28) communique directement avec le passage de circulation (36) pour le fluide frigorigène de la partie d'échange interne (34).

4. Condenseur selon l'une des revendications 1 à 3, **caractérisé en ce que** le deuxième bloc (14) comprend une série de plaques empilées (50) qui délimitent des premières lames de circulation du fluide frigorigène qui alternent avec des deuxièmes lames de circulation d'un autre fluide, et **en ce que** ces deuxièmes lames constituent des lames destinées à la circulation du fluide de refroidissement dans la partie de sous-refroidissement (28) et des lames destinées à la circulation du fluide frigorigène basse pression dans la partie d'échange interne (34) .

5. Condenseur selon la revendications 1, **caractérisé en ce que** le deuxième bloc comprend une série de plaques empilées qui délimitent des premières lames de circulation du fluide frigorigène haute pression qui alternent avec des deuxièmes lames de circulation du fluide frigorigène basse pression.

6. Condenseur selon la revendication 1, **caractérisé en ce que**, dans le cas où le deuxième bloc (14) comprend une partie de sous-refroidissement (28), la plaque d'interface (62) du deuxième bloc (14) est munie en outre d'une tubulure d'entrée (72) et d'une tubulure de sortie (74) pour le fluide de refroidissement.

7. Condenseur selon la revendication 1, **caractérisé en ce que** le premier bloc (12) comprend une plaque d'interface (52) munie de la bride de sortie (44) et une plaque d'interface opposée (54) munie d'une bride d'entrée (56) pour le fluide frigorigène à condenser.

8. Condenseur selon la revendication 7 **caractérisé en ce que** la plaque d'interface opposée (54) du premier bloc (12) est munie en outre d'une tubulure d'entrée (58) et d'une tubulure de sortie (60) pour le fluide de refroidissement.

9. Condenseur selon l'une des revendications 1 à 6, **caractérisé en ce que** le premier bloc (12) et le deuxième bloc (14) communiquent directement entre eux.

10. Circuit de refroidissement (CR) parcouru par un fluide de refroidissement et raccordé au premier bloc (12) d'échange de chaleur du condenseur (10) selon l'une des revendications 1 à 9.

11. Circuit de refroidissement (CR) selon la revendication 10, **caractérisé en ce qu'**il comprend une seule boucle de circulation reliée à un radiateur de refroidissement.

## Patentansprüche

1. Kondensator, insbesondere für einen Klimatisierungskreislauf eines Kraftfahrzeugs, umfassend einen ersten Wärmeaustauschblock (12) zu Sicherstellung der Kühlung eines Kältemittels bis zu dessen Kondensation mittels eines Kühlfluids, sowie einen zweiten Wärmeaustauschblock (14) zur Sicherstellung der Unterkühlung des Kältemittels mittels eines Kühlfluids, wobei der zweite Block (14) einen internen Austauscher (34) zur Sicherstellung eines Wärmeaustauschs zwischen dem kondensierten und unterkühlten Kältemittel, dem "Hochdruck-Kältemittel", und demselben Kältemittel, wenn es einmal entspannt ist, dem "Niederdruck-Kältemittel", enthält, wobei der Kondensator **dadurch gekennzeichnet ist, dass** der zweite Block (14) eine Schnittstellenplatte (64) umfasst, die mit einem Ausgangsflansch (66) für das Hochdruck-Kältemittel, einem Eingangsflansch (68) für das Niederdruck-Kältemittel und einem Ausgangsflansch (70) für das Niederdruck-Kältemittel versehen ist, wobei der zweite Block einen Durchströmungsdurchlass für das Hochdruck-Kältemittel vom ersten Block und einen Durchströmungsdurchlass für das Niederdruck-Kältemittel umfasst, wobei der zweite Block (14) eine Schnittstellenplatte (62) umfasst, die mit einem Eingangsflansch (46) für das Kältemittel vom ersten Block (12) versehen ist, die der Schnittstellenplatte (64) gegenüberliegt, die mit dem Ausgangsflansch (66) für das Hochdruck-Kältemittel, dem Eingangsflansch (68) für das Niederdruck-Kältemittel und dem Ausgangsflansch (70) für das Niederdruck-Kältemittel versehen ist, der Kondensator ferner eine Flasche (16) umfasst, die zwischen dem ersten Block (12) und dem zweiten Block (14) gelegen ist und geeignet ist, von dem Kältemittel durchquert zu werden, die Flasche (16) abnehmbar zwischen dem ersten Block (12) und dem zweiten Block (14) über einen Ausgangsflansch (44) bzw. einen Eingangsflansch (46) befestigt ist, die auf dem Aufnahmeabschnitt (76) der Flasche (16) befestigt sind und die gleichzeitig Schnittstellen für die Durchströmung des Kältemittels bilden.

2. Kondensator nach Anspruch 1, **dadurch gekennzeichnet, dass** der zweite Block (14) einen Unterkühlungsabschnitt (28), der einen Durchströmungsdurchlass (30) für das Kältemittel vom ersten Block (12) und einen Durchströmungsdurchlass (32) für das Kühlfluid aufweist, und einen Abschnitt zum internen Austausch (34), der einen Durchströmungsdurchlass (36) für das Hochdruck-Kältemittel vom Unterkühlungsabschnitt (28) und einen Durchströmungsdurchlass (38) für das Niederdruck-Kältemittel aufweist, umfasst.

3. Kondensator nach Anspruch 2, **dadurch gekennzeichnet, dass** der Durchströmungsdurchlass (30) für das Kältemittel des Unterkühlungsabschnitts (28) direkt mit dem Durchströmungsdurchlass (36) für das Kältemittel des Abschnitts zum internen Austausch (34) in Verbindung steht.

4. Kondensator nach einem der Ansprüche 1 bis 3, **dadurch gekennzeichnet, dass** der zweite Block (14) eine Reihe von gestapelten Platten (50) umfasst, die erste Durchströmungslamellen des Kältemittels begrenzen, die mit zweiten Durchströmungslamellen eines anderen Mittels abwechseln, und dadurch, dass diese zweiten Lamellen Lamellen, die zur Durchströmung des Kühlfluids in dem Unterkühlungsabschnitt (28) bestimmt sind, und Lamellen, die zur Durchströmung des Niederdruck-Kältemittels in dem Abschnitt zum internen Austausch (34) bestimmt sind, bilden.

5. Kondensator nach Anspruch 1, **dadurch gekennzeichnet, dass** der zweite Block eine Reihe von gestapelten Platten umfasst, die erste Durchströmungslamellen des Hochdruck-Kältemittels begrenzen, die mit zweiten Durchströmungslamellen des Niederdruck-Kältemittels abwechseln.

6. Kondensator nach Anspruch 1, **dadurch gekennzeichnet, dass** in dem Fall, in dem der zweite Block (14) einen Unterkühlungsabschnitt (28) umfasst, die Schnittstellenplatte (62) des zweiten Blocks (14) ferner mit einer Eingangsleitung (72) und einer Ausgangsleitung (74) für das Kühlfluid versehen ist.

7. Kondensator nach Anspruch 1, **dadurch gekennzeichnet, dass** der erste Block (12) eine Schnittstellenplatte (52), die mit dem Ausgangsflansch (44) versehen ist, und eine gegenüberliegende Schnittstellenplatte (54), die mit einem Eingangsflansch (56) für das zu kondensierende Kältemittel versehen ist, umfasst.

8. Kondensator nach Anspruch 7, **dadurch gekennzeichnet, dass** die gegenüberliegende Schnittstellenplatte (54) des ersten Blocks (12) ferner mit einer Eingangsleitung (58) und einer Ausgangsleitung (60) für das Kühlfluid versehen ist.

9. Kondensator nach einem der Ansprüche 1 bis 6, **dadurch gekennzeichnet, dass** der erste Block (12) und der zweite Block (14) direkt miteinander in Verbindung stehen.

10. Kühlkreislauf (CR), der von einem Kühlfluid durchlaufen wird und an den ersten Wärmeaustauschblock (12) des Kondensators (10) nach einem der Ansprüche 1 bis 9 angeschlossen ist.

11. Kühlkreislauf (CR) nach Anspruch 10, **dadurch gekennzeichnet, dass** er eine einzige Durchströmungsschleife umfasst, die mit einem Kühler verbunden ist.

## Claims

1. Condenser, in particular for a motor vehicle air conditioning circuit, comprising a first heat exchange unit (12) to ensure the cooling of a fluid refrigerant until condensation thereof by means of a coolant fluid, and also a second heat exchange unit (14) for ensuring undercooling of the fluid refrigerant by means of a coolant fluid, said second unit (14) incorporating an internal exchanger (34) for ensuring an exchange of heat between the condensed and undercooled fluid refrigerant, called "high-pressure fluid refrigerant", and the same fluid refrigerant once expanded, called "low-pressure fluid refrigerant", which condenser is **characterized in that** the second unit (14) comprises an interface plate (64) provided with an outlet flange (66) for the high-pressure fluid refrigerant, an inlet flange (68) for the low-pressure fluid refrigerant and an outlet flange (70) for the low-pressure fluid refrigerant, wherein the second unit comprises a circulation passage for the high-pressure fluid refrigerant originating from the first unit and a circulation passage for the low-pressure fluid refrigerant, wherein the second unit (14) comprises an interface plate (62) provided with an inlet flange (46) for the fluid refrigerant originating from the first unit (12), opposite said interface plate (64) provided with the outlet flange (66) for the high-pressure fluid refrigerant, the inlet flange (68) for the low-pressure fluid refrigerant and the outlet flange (70) for the low-pressure fluid refrigerant, and said condenser further comprises a bottle (16) interposed between the first unit (12) and the second unit (14) and capable of being traversed by the fluid refrigerant, and said bottle (16) is fixed detachably between the first unit (12) and the second unit (14) by means, respectively, of an outlet flange (44) and an inlet flange (46) that are fixed on the receiving part (76) of the bottle (16) and form at the same time interfaces for the circulation of the fluid refrigerant.

2. Condenser according to Claim 1, **characterized in that** the second unit (14) comprises a undercooling part (28) having a circulation passage (30) for the fluid refrigerant originating from the first unit (12) and the circulation passage (32) for the coolant fluid and an internal exchange part (34) having a circulation passage (36) for the high-pressure fluid refrigerant originating from the undercooling part (28) and a circulation passage (38) for the low-pressure fluid refrigerant.

3. Condenser according to Claim 2, **characterized in that** the circulation passage (30) for the fluid refrigerant of the undercooling part (28) communicates directly with the circulation passage (36) for the fluid refrigerant of the internal exchange part (34).

4. Condenser according to one of Claims 1 to 3, **characterized in that** the second unit (14) comprises a series of stacked plates (50) that delimit first blades for circulation of the fluid refrigerant that alternate with second blades for circulation of another fluid, and **in that** these second blades constitute blades intended for the circulation of the coolant fluid in the undercooling part (28) and blades intended for the circulation of the low-pressure fluid refrigerant in the internal exchange part (34).

5. Condenser according to Claim 1, **characterized in that** the second unit comprises a series of stacked plates that delimit the first blades for circulation of the high-pressure fluid refrigerant that alternate with second blades for circulation of the low-pressure fluid refrigerant.

6. Condenser according to Claim 1, **characterized in that**, if the second unit (14) comprises a undercooling part (28), the interface plate (62) of the second unit (14) is further provided with an inlet pipe (72) and an outlet pipe (74) for the coolant fluid.

7. Condenser according to Claim 1, **characterized in that** the first unit (12) comprises an interface plate (52) provided with the outlet flange (44) and an opposite interface plate (54) provided with an inlet flange (56) for the fluid refrigerant to be condensed.

8. Condenser according to Claim 7, **characterized in that** the opposite interface plate (54) of the first unit (12) is further provided with an inlet pipe (58) and an outlet pipe (60) for the coolant fluid.

9. Condenser according to one of Claims 1 to 6, **characterized in that** the first unit (12) and the second unit (14) are in direct communication with one another.

10. Coolant circuit (CR) traversed by a coolant fluid and connected to the first heat exchange unit (12) of the condenser (10) according to one of Claims 1 to 9.

11. Coolant circuit (CR) according to Claim 10, **characterized in that** it comprises a single circulation loop connected to a cooler.
